# EUROPÄISCHE PATENTANMELDUNG

(11) **EP 4 428 105 A1**
(43) Veröffentlichungstag der Anmeldung: **11.09.2024**
(21) Anmeldenummer: 23161292.0
(22) Anmeldetag: 10.03.2023
(51) Int. Cl.: C02F 3/10, C02F 3/06

(54) **ABWASSERREINIGUNGSANLAGE UND GEHÄUSE FÜR ABWASSERREINIGUNGSANLAGE**

(71) Anmelder: Otto Graf GmbH Kunststofferzeugnisse, 79331 Teningen (DE)
(72) Erfinder:
(74) Vertreter: Grünecker Patent- und Rechtsanwälte PartG mbB

(57) **Zusammenfassung**

Abwasserreinigungsanlage, die mindestens eine Kammer (3), vorzugsweise eine Kunststoffkammer, umfasst, dadurch gekennzeichnet, dass die mindestens eine Kammer (3) zumindest teilweise mit mehreren Gehäusen (10, 100) gefüllt ist, die Gehäuse (10, 100) jeweils ein, vorzugsweise elastisches, Filtermaterial (12) beinhalten und jeweils mindestens eine Öffnung (11, 13, 24, 113) aufweisen, die so ausgeführt ist, dass Abwasser (W) eintreten und austreten kann, die Gehäuse (10, 100) so ausgebildet sind, dass sie jeweils das Filtermaterial (12) in ihrem Innenraum (26, 126) halten können und vorzugsweise eine Hinterschneidung bezüglich der mindestens einen Öffnung (11, 13, 24, 113) aufweisen, und die Gehäuse (10, 100) in vertikaler Richtung derart übereinander angeordnet sind, dass sich mehrere Gehäuselagen (L1 bis Ln) übereinander bilden.

Weiter umfasst die Erfindung Gehäuse, vorzugsweise Kunststoffgehäuse, zum Aufnehmen eines Filtermaterials (12) für eine Abwasserreinigungsanlage (1) gemäß einem der Ansprüche 1 bis 3, wobei das Gehäuse (10, 100) mindestens eine Öffnung (11, 13, 24, 113) aufweist, wobei das Gehäuse (10, 100) so ausgebildet ist, dass es das Filtermaterial (12) in seinem Innenraum (26, 126) halten kann und vorzugsweise eine Hinterschneidung bezüglich der mindestens einen Öffnung (11, 13, 24, 113) aufweist.

## Beschreibung

Die vorliegende Erfindung betrifft eine Abwasserreinigungsanlage, sowie ein Gehäuse für die Abwasserreinigungsanlage.

Aus dem Stand der Technik sind Abwasserreinigungsanlagen bekannt, in welchen das Wasser in mehreren aufeinanderfolgenden Schritten, welche meist in unterschiedlichen Kammern erfolgen, gereinigt wird.

Hierbei wird das Wasser typischerweise in einer ersten Kammer mechanisch vorgereinigt. Daraufhin wird das Wasser in einer zweiten Kammer gefiltert. In der zweiten Kammer wird das Wasser möglichst gleichmäßig mit dem Filtermedium in Kontakt gebracht. Die Bakterien, welche im Filtermaterial enthalten sind, entnehmen dem Abwasser die Schadstoffe, wodurch dieses gereinigt wird.

Im Filtermedium wird das Wasser typischerweise in kleinen Mengen mit der Umgebungsluft in Kontakt gebracht. So können die Bakterien dem Wasser die Schadstoffe im Zuge eines aeroben Stoffwechselprozesses entziehen. Aufgrund der Schwerkraft wird hierbei das Filtermaterial durch den Druck des Wassers in den unteren Bereichen der zweiten Kammer der Abwasserreinigungsanlage komprimiert.

Beim Komprimieren des Filtermaterials schließen sich die Zwischenräume zwischen den einzelnen Wassermengen und die Umgebungsluft wird verdrängt. Deshalb sterben die aeroben Bakterien aufgrund von Sauerstoffmangel ab und entziehen dem Abwasser keine Schadstoffe mehr, weshalb das Abwasser nicht mehr ausreichend gereinigt werden kann. Es entstehen unerwünschte Gerüche und die Reinigungsqualität der Abwasserreinigungsanlage nimmt ab.

Hiervon ausgehend, liegt der vorliegenden Erfindung die Aufgabe zugrunde, eine Abwasserreinigungsanlage, bzw. ein Gehäuse für eine Abwasserreinigungsanlage bereitzustellen, die es ermöglichen, die Geruchsbelastung zu verringern und gleichzeitig die Reinigungsqualität der Abwasserreinigungsanlage zu erhöhen.

Erfindungsgemäß wird diese Aufgabe durch eine Abwasserreinigungsanlage gelöst, die mindestens eine Kammer, vorzugsweise eine Kunststoffkammer, umfasst, wobei mindestens eine der Kammern mit mehreren Gehäusen zumindest teilweise gefüllt ist, und die Gehäuse jeweils ein vorzugsweise elastisches Filtermaterial beinhalten und jeweils mindestens eine Öffnung aufweisen, die so ausgeführt ist, dass Abwasser eintreten und austreten kann, und die Gehäuse so ausgebildet sind, dass sie jeweils das Filtermaterial in ihrem Innenraum halten können und vorzugsweise eine Hinterschneidung bezüglich der mindestens einen Öffnung aufweisen.

Insbesondere ist mindestens eine der Kammern so mit mehreren Gehäusen zumindest teilweise gefüllt, dass in vertikaler Richtung bezogen auf die Kammer mehrere Gehäuse übereinanderliegen. So können die Gehäuse die Gewichtskraft der darüber liegenden Gehäuse, beziehungsweise deren Filtermaterialien und das darin enthaltene Abwasser abfangen und so ein übermäßiges Komprimieren des in den Gehäusen enthaltenen Filtermaterials verhindern.

Die oben genannte Hinterschneidung wird in der vorliegenden Patentschrift folgendermaßen definiert: das Gehäuse beinhaltet eine Hinterschneidung bezüglich einer Öffnung, wenn es zumindest teilweise in einem Schnitt parallel zur Öffnungsebene einen Querschnitt aufweist, der größer ist als der Öffnungsquerschnitt. So kann das Filtermaterial innerhalb des Gehäuses derart ausgebildet sein, dass es nicht durch die Öffnung hinausgleiten kann.

Dadurch, dass mehrere übereinanderliegende Gehäuse das Filtermaterial beinhalten, wirkt auf das Filtermaterial nicht die Gewichtskraft des gesamten oberhalb liegenden Filtermaterials und des darin enthaltenen Abwassers. So wird eine Komprimierung des Filtermaterials, vor allem in den unteren Bereichen, verhindert, oder zumindest verringert, und es wird dadurch gewährleistet, dass sich genügend sauerstoffhaltige Luft zwischen den einzelnen Wassermengen im Filtermaterial befindet. Durch die formerhaltende Wirkung der Gehäuse auf das Filtermaterial kann so auch in unteren Bereichen der zweiten Kammer der Abwasserreinigungsanlage der aerobe Stoffwechselprozess der Bakterien zur Reinigung des Abwassers stattfinden. So kann die Reinigungsqualität der Abwasserreinigungsanlage erhöht werden, während die Emission von Faulgasen verringert werden kann.

In einer weiteren Ausführungsform der Abwasserreinigungsanlage, können die Gehäuse so ausgeführt sein, dass sich die Abmessung der Außenkontur der Gehäuse, die weiter unten in der Kammer angeordnet sind, durch den Druck durch das Gewicht der weiter oben angeordneten Gehäuse in vertikaler Richtung um weniger als 30%, insbesondere um weniger als 15% im Vergleich zum unbelasteten Zustand verändert.

So können die Gehäuse maximal elastisch durch die Gewichtskraft der Gehäuse und Filtermedien der oberen Bereiche, bzw. das darin enthaltene Abwasser, komprimiert werden. Dadurch wird gewährleistet, dass die Gehäuse eine formerhaltende Wirkung auf die im Innenraum der Gehäuse enthaltenen Filtermaterialien haben, bzw. dem Komprimieren der Filtermaterialien entgegenwirken.

In einem weiteren Ausführungsbeispiel der Abwasserreinigungsanlage kann das Gehäuse so geformt sein, dass zwischen den Gehäusen Freiräume ausgebildet sind. In den Freiräumen zwischen den Gehäusen befindet sich kein Filtermaterial, das das Abwasser aufnehmen könnte.

Somit kann die Luftzirkulation, insbesondere der zweiten Kammer der Abwasserreinigungsanlage, verbessert werden.

Die Erfindung wird ebenfalls durch Gehäuse, vorzugsweise ein Kunststoffgehäuse, zum Aufnehmen eines Filtermaterials für eine der oben beschriebenen Ausführungsformen der Abwasserreinigungsanlage gelöst, wobei das Gehäuse mindestens eine Öffnung aufweist, die so ausgeführt ist, dass eine Flüssigkeit eintreten und austreten kann, wobei das Gehäuse so ausgebildet ist, dass es das Filtermaterial in seinem Innenraum halten kann und vorzugsweise eine Hinterschneidung bezüglich der mindestens einen Öffnung aufweist.

Durch die Öffnung des Gehäuses kann Abwasser in das Gehäuse eintreten und austreten. Durch die formerhaltende Wirkung der Gehäuse auf das Filtermaterial, welches in die Gehäuse eingebracht werden und aufgrund der Form des Gehäuses, insbesondere der Hinterschneidung, nicht aus dem Gehäuse rutschen kann, wird verhindert, dass sich das Filtermaterial aufgrund der Gewichtskraft der Filtermaterialien oberer Bereiche bzw. des darin enthaltenen Abwassers komprimiert. So wird gewährleistet, dass ausreichend Luft zu den für die Reinigung des Wassers von Schadstoffen verantwortlichen Bakterien gelangen kann.

Gemäß einem Ausführungsbeispiel des Gehäuses kann das Gehäuse so ausgeführt sein, dass sich die Abmessung der Außenkontur des Gehäuses durch eine Druckbelastung von 100N, insbesondere durch eine Druckbelastung von 500N, in Belastungsrichtung um weniger als 30%, insbesondere um weniger als 15% im Vergleich zum unbelasteten Zustand verändert. So wird gewährleistet, dass die Gehäuse formerhaltend auf das Filtermaterial wirken und Ihren Innenraum nicht, beziehungsweise nur im geringen Maß, komprimieren. So kann die Komprimierung von etwaigem Filtermaterial verhindert werden.

Gemäß einer weiteren Ausführungsform kann das Gehäuse einstückig, insbesondere als Spritzgussteil, ausgebildet sein. Das Fertigen des Gehäuses aus einem Stück, insbesondere mit einem Spritzgussverfahren, ermöglicht zum einen eine zeit- und energieeffiziente Fertigung des Gehäuses, zum anderen werden strukturelle Schwachstellen durch das Fügen von mehrteiligen Gehäusen vermieden.

Gemäß einer weiteren alternativen Ausführungsform können die Gehäuse zweistückig oder mehrstückig ausgeführt sein. Zweistückige oder mehrstückige Gehäuse erleichtern das Einbringen des Füllmaterials, welches vor dem Fügen der einzelnen Teilstücke bereits in eines der Teilstücke eingebracht werden kann ohne es komprimieren zu müssen. Die Gehäuse können dann durch eine reib- und/oder formschlüssige Verbindung montiert werden.

Gemäß einem weiteren Ausführungsbeispiel kann das Gehäuse ein Filtermaterial beinhalten, insbesondere ein elastisches hydrophiles Filtermaterial, vorzugsweise aus recyceltem Kunststoff, Steinwolle oder Glaswolle.

Das Filtermaterial kann das Abwasser, das durch die Öffnung ein- bzw. austritt, aufnehmen und mit der Umgebungsluft und aeroben Bakterien in Kontakt bringen, sodass die Bakterien die Schadstoffe aus dem Abwasser im Zuge eines aeroben Stoffwechselprozesses entziehen können. Kunststoff, Steinwolle, Glaswolle oder auch Watte aus recyceltem PET eignen sich besonders gut, um das Abwasser zu vereinzeln.

Gemäß einer weiteren Ausführungsform kann die mindestens eine Öffnung zum Aufnehmen des Filtermaterials ausgebildet sein. Das Filtermaterial kann so bei der Fertigung besonders effizient in das Gehäuse eingebracht werden. Hierbei wird das Filtermaterial komprimiert und durch die dazu ausgebildete Öffnung in das Gehäuse eingebracht. Anschließend dehnt sich das Filtermaterial zumindest teilweise wieder aus, da das Gehäuse bezüglich der Öffnung eine Hinterschneidung aufweist. So kann das Filtermaterial anschließend nicht mehr aus dem Gehäuse herausgleiten.

Gemäß einem weiteren Ausführungsbeispiel kann das Filtermaterial den gesamten Innenraum des Gehäuses ausfüllen. Damit wird das Volumen des Gehäuses maximal ausgenutzt, was die Reinigungsleistung bezüglich des verbrauchten Volumens des Gehäuses mit elastischem Filtermaterial erhöht.

Gemäß einem weiteren Ausführungsbeispiel können zwischen 40% und 85% der Oberfläche des Gehäuses (10, 100) geöffnet sein.

Gemäß einem weiteren Ausführungsbeispiel kann das Gehäuse einen oberen Teil und einen unteren Teil aufweisen, die über eine ringförmige Struktur miteinander verbunden sind, wobei die Abmessung der Außenkontur des Gehäuses von der ringförmigen Struktur aus zum oberen und unteren Ende des Gehäuses abnimmt und sich vorzugsweise im oberen Teil mehrere zueinander gekrümmte Krallen von der ringförmigen Struktur aus nach oben erstrecken.

Mit dieser Gehäusestruktur ist es möglich, gleichzeitig eine hohe strukturelle Stabilität des Gehäuses für das Filtermaterial innerhalb des Gehäuses zu gewährleisten und gleichzeitig das Abwasser möglichst wenig am Ein- und/oder Auslaufen zu hindern.

In einer weiteren Ausführungsform können sich im unteren Teil von der ringförmigen Struktur aus mehrere zueinander gekrümmte Stege nach unten erstrecken und an ihren Enden, insbesondere über eine zweite ringförmige oder kreisförmige Struktur, zusammenlaufen. Diese sternförmige Struktur bietet gleichzeitig Steifigkeit, während genügend Öffnungen zum Ein- und/oder Ausflie-ßen des Wassers aufrechterhalten werden. Zudem kann das Filtermaterial auf der zweiten ringoder kreisförmigen Struktur am Ende der Stege gleichmäßig aufliegen, was die Komprimierung des Filtermaterials verringert.

In einem weiteren Ausführungsbeispiel können die Stege und Krallen auf der ringförmigen Struktur zueinander versetzt angeordnet sein. Durch die versetzte oder gegenläufige Anordnung der Stege und Krallen kann der minimale Querschnitt der Ringstruktur bei gleichem Materialbedarf erhöht werden. So kann gleichzeitig eine verhältnismäßig große Öffnungsdichte im Gehäuse und eine hohe Stabilität des Gehäuses gewährleistet werden.

In einer weiteren Ausführungsform können die Enden der Krallen zur Ringstruktur zurückgebogen sein. D. h., dass sich der Biegeradius der Krallen an den Enden der Krallen verringert. So wird das Filtermaterial besonders fest im Gehäuse verankert, was das Hinausgleiten des Filtermaterials verhindert.

In einem weiteren Ausführungsbeispiel können die Krallen und Stege mindestens eine Verstärkungsrippe, ausgehend von der ringförmigen Struktur in Richtung ihrer Enden, aufweisen. Durch die Verstärkungsrippe kann die Stabilität des Gehäuses erhöht werden, ohne dass die der Anteil der Öffnungen in der Außenkontur des Gehäuses verringert wird.

Gemäß einer weiteren Ausführungsform sind die Gehäuse so geformt, dass in einer Gruppe von aufeinanderliegenden Gehäusen Zwischenräume zwischen den erfindungsgemäßen Gehäusen entstehen. Aufgrund der Zwischenräume kann die Zirkulation von sauerstoffhaltiger Umgebungsluft, die für den Abbau der Schadstoffe aus dem Abwasser durch die aeroben Bakterien notwendig ist, erhöht werden.

Gemäß einem weiteren Ausführungsbeispiel kann das Gehäuse eine abgerundete Außenkontur aufweisen, sodass zwischen den gestapelten Behältern Zwischenräume zur Zirkulation der sauerstoffhaltigen Umgebungsluft entstehen.

Gemäß einer weiteren Ausführungsform kann das Gehäuse die Außenform einer abgeflachten Kugel, einer Kugel, eines Polyeders, eines Ellipsoids oder eines Zylinders aufweisen. Diese Au-ßenformen zeichnen sich besonders durch ein vorteilhaftes Verhältnis von Oberfläche zu Volumeninhalt und Steifigkeit aus. Zudem sind diese Formen, insbesondere in einem Spritzgussverfahren, durch ihre zu den Enden hin abgeflachte Form besonders effizient herstellbar. Des Weiteren bilden die runden Formen Zwischenräume zur Zirkulation der sauerstoffhaltigen Umgebungsluft.

In einem weiteren Ausführungsbeispiel kann eine Abmessung des Gehäuses in eine der drei Dimensionen 100 mm, insbesondere 250 mm, nicht überschreiten. Durch die limitierte Abmessung in eine Richtung des Gehäuses kann das Gehäuse so angeordnet werden, dass die limitierte Abmessung in vertikaler Richtung angeordnet ist. So kann die Kompression des Filtermaterials aufgrund des Eigengewichts, bzw. des Gerichts des Abwassers, das sich im Filtermaterial des Gehäuses befindet, verhindert werden.

Gemäß einer weiteren Ausführungsform kann das Volumen des Gehäuses im Bereich von 150cm³ bis 20.000cm³ liegen. In diesem Bereich sind einerseits die Gehäuse so klein ausgeführt, dass die Kompression des Filtermaterials aufgrund des Eigengewichts des enthaltenen Abwassers verhindert wird, und andererseits so groß ausgeführt, dass ein wirtschaftlicher Einsatz in einer Abwasserreinigungsanlage möglich ist.

Die Erfindung wird nachfolgend bezugnehmend auf die Figuren anhand von Ausführungsbeispielen weiter im Detail beschrieben. Hierbei können einzelne Merkmale der jeweiligen Ausführungsbeispiele beliebig miteinander kombiniert werden, um neue erfindungsgemäße Ausgestaltungen zu erzielen.
- Figur 1: zeigt eine Abwasserreinigungsanlage sowie deren Längsschnitt entlang der Schnittebene X und die Detailansicht A gemäß der Erfindung.
- Figur 2A: zeigt perspektivisch eine Ausführungsform des Gehäuses.
- Figur 2B: zeigt perspektivisch eine Ausführungsform des Gehäuses, dessen Innenraum mit Filtermaterial ausgefüllt ist.
- Figur 3A: zeigt die Seitenansicht einer Ausführungsform des Gehäuses sowie dessen Querschnitt entlang der Schnittebene Y.
- Figur 3B: zeigt die Ansicht eine Ausführungsform des Gehäuses von oben sowie dessen Längsschnitt entlang der Schnittebene Z.

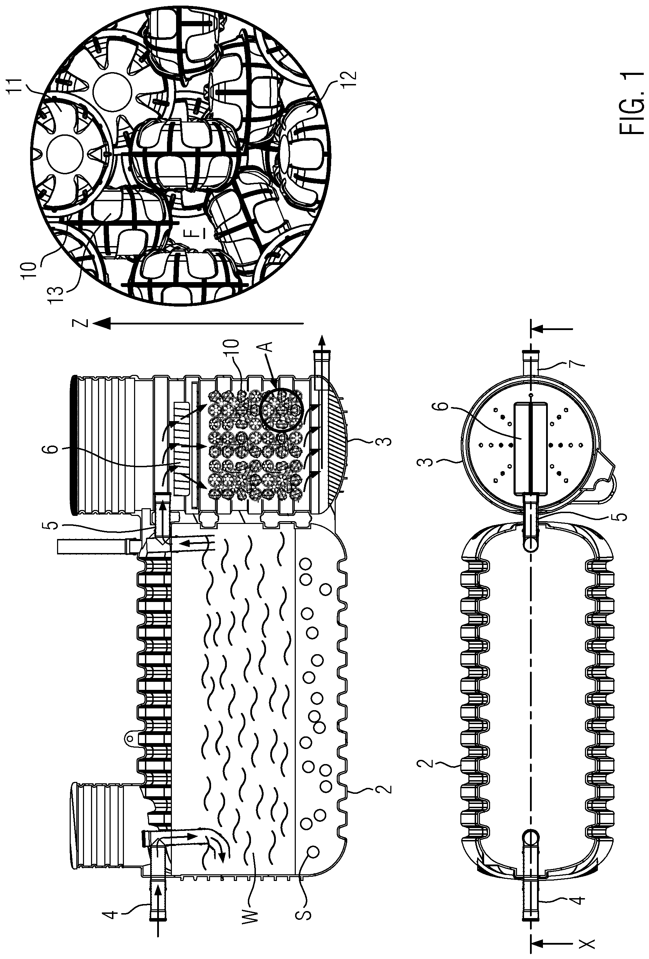

Figur 1 zeigt eine Ausführungsform einer Abwasserreinigungsanlage 1 gemäß der Erfindung, die eine erste Kammer 2 und eine zweite Kammer 3 umfasst. Zum Zuführen des Abwassers kann die erste Kammer 2 einen Einlaufstutzen 4 in einem oberen Bereich umfassen. Zudem kann die erste Kammer 2 einen Überlaufstutzen 5 umfassen, der ebenfalls in einem oberen Bereich der ersten Kammer 2 angeordnet ist und die erste Kammer 2 mit der zweiten Kammer 3 verbindet. Die Abwasseranlage 1 kann auch ohne die erste Kammer 2 realisiert werden.

Die zweite Kammer 3 kann zylindrisch ausgebildet sein. Die zweite Kammer 3 kann ein Verteilersystem 6 umfassen, um den Abwasserstrom aus dem Überlaufstützen 5 über den Querschnitt der zweiten Kammer 3 zu verteilen. Zudem kann die zweite Kammer 3 im unteren Bereich der zweiten Kammer 3 einen Auslaufstutzen 7 für das gereinigte Abwasser umfassen. Hierbei hat die zweite Kammer 3 insbesondere ein Bruttofassungsvermögen von 800I bis 5000I.

Die zweite Kammer 3 ist mit einer Vielzahl von Gehäusen 10 gemäß der Erfindung zumindest teilweise, maximal bis zum Verteilersystem 6, gefüllt, sodass in einer vertikalen Richtung Z in der Kammer mehrere Gehäuse 10 übereinanderliegen. Die Gehäuse 10 sind in dieser Ausführungsform im Wesentlichen kugelförmig mit abgeflachten Bereichen an den Enden ausgebildet. Somit sind Freiräume F zwischen den einzelnen Gehäusen 10 vorhanden und können eine erhöhte Luftzirkulation ermöglichen. Weitere Formen sind jedoch auch möglich. Gemäß einer Variante können die Gehäuse 10 prismenförmig, ellipsoidförmig oder zylinderförmig ausgeführt sein, um größere Auflageflächen bereitzustellen, oder aber auch quaderförmig ausgebildet sein.

Die Gehäuse 10 können dabei unregelmäßig in der zweiten Kammer 3 angeordnet sein. Damit kann die zweite Kammer 3 mit den Gehäusen 10 mit den einzelnen Filtermaterialien 12 in Form von Schüttgut befüllt werden. Bei der Wartung, bzw. beim Austausch können die Gehäuse 10 mit den Filtermaterialien 12 durch einfaches Absaugen aus der Kammer entnommen werden und die Kammer mit neuen Gehäusen und neuem Filtermaterial 12 durch Schüttung wiederbefüllt werden. Gemäß einer Variante können die Gehäuse 10 auch nebeneinanderliegend in Lagen in der zweiten Kammer 3 angeordnet sein und daher eine kompakte Anordnung bilden. Dabei können die Gehäuse 10 übereinander fluchtend zueinander aufeinanderliegen.

Wie in der vergrößerten Detailansicht A zu sehen ist, sind die Gehäuse mit einem Filtermaterial 12 gefüllt, insbesondere vollständig gefüllt. Hierbei kann bevorzugt ein elastischer und hydrophiler Kunststoff, elastische und hydrophile Glas- oder Steinwolle, oder auch Watte aus recyceltem PET als Filtermaterial 12 zum Einsatz kommen.

Die Gehäuse 10 können, wie in diesem Ausführungsbeispiel, mehrere Öffnungen 11 und 13 aufweisen. Es sind aber auch Ausführungsformen mit nur einer Öffnung im Gehäuse denkbar.

Mit der oben beschriebenen Abwasserreinigungsanlage 1 kann Abwasser W erfindungsgemäß wie folgt gereinigt werden:
Das Abwasser W gelangt über den Einfüllstutzen 4 in die erste Kammer 2. In der ersten Kammer 2 kann das Abwasser W grob mechanisch vorgereinigt werden, indem sich ungelöste Schadstoffe S am Boden der ersten Kammer 2 absetzen können und das überlaufende Abwasser W ohne die ungelösten Schadstoffe S durch den Überlaufstützen 5 in die zweite Kammer 3 gelangen kann. Das Abwasser W kann dann vom Überlaufstützen 5 in das Verteilersystem 6 fließen, welches das Abwasser W über die Gehäuse 10 verteilt. Hierbei gelangt das Abwasser W über die Öffnungen 11 und 13 zum Filtermaterial 12 und das Abwasser W benetzt die feinen Strukturen des Filtermaterials 12. Dadurch wird das Wasser auf kleinere Volumen verteilt und somit mit der in der zweiten Kammer 3 vorhandenen Umgebungsluft in Kontakt gebracht. So ist es den im Filtermaterial 12 vorhandenen Bakterien möglich, die Schadstoffe S mithilfe der Umgebungsluft aus dem Abwasser W zu verstoffwechseln und damit das Abwasser W zu reinigen.

Im Unterschied zum Stand der Technik ermöglicht der Einsatz der mit Filtermaterial gefüllten Gehäuse eine verbesserte Durchsetzung mit der Umgebungsluft, da die Gehäuse so ausgebildet sind, dass sie im Einsatz ihre Form im Wesentlichen beibehalten und es nicht mehr zum Zusammendrücken des Filtermaterials, wie im Stand der Technik, kommt.

Aufgrund der Vielzahl von einzelnen Gehäusen 10, die formerhaltend auf das in ihnen enthaltene Filtermaterial 12 wirken, wird das Filtermaterial 12 nur durch das Gewicht des Abwassers W und Filtermaterials 12 innerhalb des jeweiligen Gehäuses 10 belastet. Das Gewicht der Gehäuse 10, inklusive des enthaltenen Filtermaterials 12 und Abwassers W, wird hingegen von den darunterliegenden Gehäusen 10 getragen. So wird gewährleistet, dass sich das Filtermaterial 12 auch in den unteren Bereichen der Gehäuse 10 in der zweiten Kammer 3 nicht oder zumindest weniger komprimiert. Der Formerhalt des Filtermaterials 12 sorgt somit für einen verbesserten aeroben Stoffwechselprozess der Bakterien innerhalb des Filtermaterials 12 zum Reinigen des Abwassers W.

Das im Filtermaterial 12 gereinigte Abwasser W kann anschließend durch den darunterliegenden Auslaufstutzen 7 abgeführt werden.

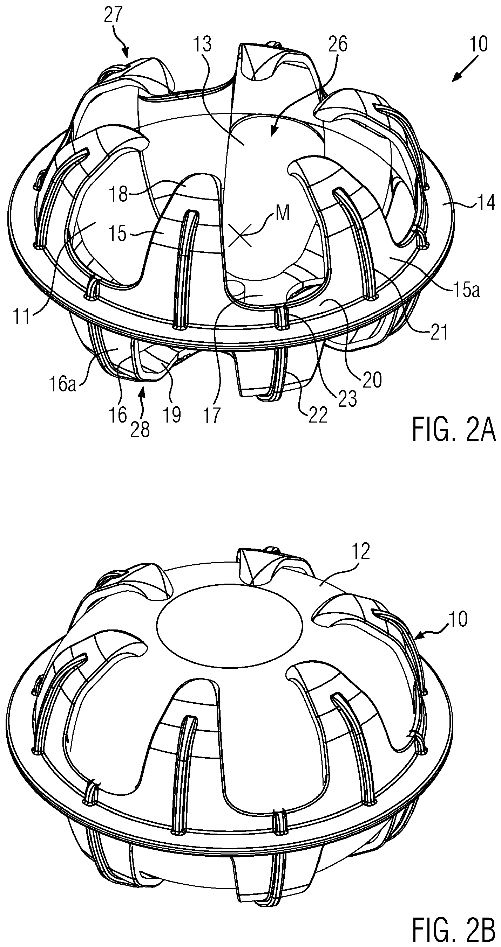

In Figur 2A ist eine einstückige Ausführungsform des Gehäuses 10 gemäß der Erfindung und wie es in der oben beschrieben Abwasserreinigungsanlage 1 zum Einsatz kommt dargestellt.

Die Außenform des Gehäuses 10 ist hierbei näherungsweise ellipsoidförmig bzw. entspricht einer abgeflachten Kugelform. Wie erwähnt, sind auch quaderförmige, zylinderförmige, polyederförmige oder kugelförmige Außenformen denkbar.

Dabei werden Gehäuseformen bevorzugt, die gemäß Ihrer Außenform zu Freiräumen zwischen nebeneinanderliegenden Gehäusen 10 führen, da durch die Freiräume die Luftzirkulation erhöht werden kann.

Das Gehäuse 10 kann einen insbesondere mittig angeordneten ringförmigen Bereich 14 aufweisen, der das Gehäuse 10 in einen oberen Teil 27 und einen unteren Teil 28 teilt. Das Gehäuse 10 kann aber auch so gedreht werden, dass der obere Teil 27 unten und der untere Teil 28 oben angeordnet ist.

Vom ringförmigen Bereich 14 ausgehend können in einem oberen Teil 27 zueinander gekrümmte Krallen 15 ausgebildet sein, sodass sich der Querschnitt in Ebenen parallel zur Ebene des ringförmigen Bereichs 14 der Außenkontur des Gehäuses 10 zu den Enden 18 der gekrümmten Krallen 15 hin verringert. Gegenläufig zu den Krallen 16 können im unteren Teil 28 an der ringförmigen Struktur 14 Stege 16 ausgebildet sein, welche zueinander hingebogen sind, sodass sich der Querschnitt der Außenkontur des Gehäuses 10 in Ebenen parallel zur Ebene des ringförmigen Bereichs 14 zu den Enden 19 der Stege 16 hin ebenfalls verringert. Die Stege 16 können dabei an einer im Wesentlichen ringförmigen oder kreisförmigen Struktur 17 enden.

Wie in der Figur 2a erkennbar, erstreckt sich die ringförmige Struktur 14 bevorzugt von den Krallen 15 und den Stegen 16 nach außen hin weg. Dadurch können die Filtermaterialien 12 in benachbarten Gehäusen auf einem definierten Abstand zueinander gehalten werden.

Das Gehäuse 10 kann zudem Verstärkungsrippen 21 an den gekrümmten Krallen 15 aufweisen. Die Verstärkungsrippen 21 sind insbesondere an der Außenfläche der Krallen 15a ausgebildet und mit der ringförmigen Struktur 14 verbunden. Mit den Verstärkungsrippen kann die Steifigkeit der Krallen 15 wesentlich erhöht werden.

Auch die Stege 16 können Verstärkungsrippen 22 aufweisen, die ebenfalls an der Außenfläche der Stege 16a ausgebildet und mit der ringförmigen Struktur 14 verbunden sind. Die Verstärkungsrippen 22 der Stege 16 können zudem auch auf der gegenüberliegenden Seite (im oberen Teil 27) ausgebildet sein.

Hierbei kann sich die Verstärkungsrippe 22 bis auf die obere Seite der ringförmigen Struktur erstrecken. Dieser kürzerer Abschnitt 23 der Verstärkungsrippe 22 ist im Bereich 20 zwischen zwei benachbarten Krallen 15 ausgebildet. Damit kann die Steifigkeit des Gehäuses 10 weiter erhöht werden.

Die Krallen 16 können zudem so geformt sein, dass deren Enden 18 zur ringförmigen Struktur zurück, insbesondere zum Zentrum M des Gehäuses 10, zeigen. Dies wird durch einen verringerten Biegeradius der Krallen 15 im Bereich der Enden der Krallen 18 erreicht. So kann das Filtermaterial 12, siehe Figur 2B, besser im Gehäuse 10 fixiert werden.

Gemäß einer Variante kann das Gehäuse 10 auch zweistückig oder mehrstückig ausgeführt sein. So können die einzelnen Teilstücke, insbesondere Spritzgussteile aus Kunststoff, bei der Montage der Gehäuse 10 mithilfe von form- und/oder kraftschlüssigen Verbindungen gefügt werden, nachdem das Filtermaterial 12 in eines der Teilstücke eingelegt wurde. Damit muss das Filtermaterial 12 nicht komprimiert werden, um es in das Gehäuse 10 einzubringen. Weiterhin ermöglicht die mehrstückige Ausführung der Gehäuse 10, insbesondere durch die Fertigung mittels Spritzgussverfahren, eine erhöhte Flexibilität bei der Formgebung des Gehäuses 10.

Figur 2B zeigt das erfindungsgemäße Gehäuse 10 der Figur 2A mit Filtermaterial 12.

Hierbei ist das Gehäuse 10 vollständig durch das Filtermaterial 12 aufgefüllt, wodurch das komplette Innenvolumen des Gehäuses 10 für die Filterzwecke ausgenutzt wird, bzw. den Bakterien zur Verfügung steht. Gemäß einer Variante kann das Gehäuse auch nur teilweise mit Filtermaterial 12 gefüllt sein.

Das Filtermaterial 12, welches insbesondere eine ähnliche Form wie der Innenraum des Gehäuses 26 aufweist, kann z. B. durch die Öffnung 11 im oberen Teil 27 des Gehäuses 10 in das Gehäuse 10 eingebracht werden.

Hierfür wird das Filtermaterial 12, welches bevorzugt formelastisch ist, zunächst soweit komprimiert, dass es durch die Öffnung 11 auf Seiten der Krallen 15 in das Gehäuse 10 eingebracht werden kann. Da das Gehäuse 10 bezüglich der Öffnung 11 und auch den anderen Öffnungen eine Hinterschneidung aufweist, kann das Volumen des insbesondere elastischen Filtermaterials 12 zumindest teilweise wieder zunehmen, kann das Filtermaterial 12 nicht mehr aus der Öffnungen 11 oder einer der anderen Öffnungen 19-13 entgleiten, nachdem das Filtermaterial 12 sich zumindest teilweise entspannt hat und an den Innenseiten der Krallen 15 und Stege 16 anliegt.

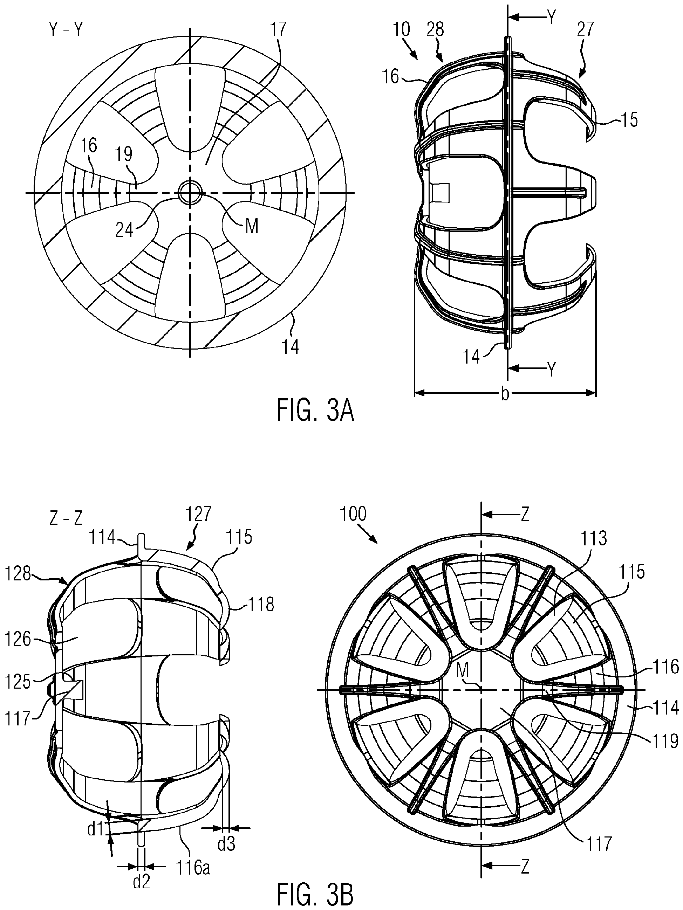

Figur 3A zeigt eine Seitenansicht eines Ausführungsbeispiels des Gehäuses 10, in der zu sehen ist, wie die zueinander gekrümmten Krallen 15 im oberen Teil 27 und die zueinander gebogenen Stege 16 im unteren Teil 28 gegenläufig zueinander von der ringförmigen Struktur 14 ausgehend ausgebildet sind. Wie in der Querschnittsansicht der Schnittebene Y gezeigt, besitzt der Querschnitt der ringförmigen Struktur 14 insbesondere eine größere Wandstärke d als die Stege 16 und/oder Krallen 16. Die Wandstärke d ist vorzugsweise zwischen 1,5mm und 3mm, um die nötige Festigkeit des Gehäuses zu gewährleisten. In der Schnittansicht Y ist zudem die ringförmige Struktur 17 dargestellt, welche die Enden 19 der Stege 16 zu einer weiteren ringförmigen Struktur verbinden kann. Mittig kann in dieser Struktur eine insbesondere runde Öffnung 24 ausgebildet sein, die einen Durchmesser im Bereich von 25% bis 60% des Durchmessers f der Außenkontur der ringförmigen Struktur 17 besitzt. Die ringförmige Struktur an den Enden 19 der Stege 16 sorgt dafür, dass das Gehäuse 10 eine Auflagefläche für das Filtermaterial 12 bietet, die so ausgeführt ist, dass sich das Filtermaterial möglichst wenig komprimiert. Gleichzeitig kann durch die Öffnung 24 in der ringförmigen Struktur 17 an den Enden 19 der Stege 16 Abwasser W ein- und austreten.

Gemäß einer Variante ist die Abmessung des Gehäuses 10 in einer Dimension, insbesondere die Abmessung des Gehäuses in vertikaler Richtung b, in einem Bereich von 50mm bis 70mm. So kann das Komprimieren des Filtermaterials 12 durch eine zu große Abmessung b des Gehäuses 10 und des Filtermaterials 10 in vertikaler Richtung und den damit verbundenen Druck der Gewichtskraft verhindert werden.

Zudem kann das Volumen des Innenraums des Gehäuses 26 im Bereich zwischen 150cm³ und 20.000cm³ liegen, wodurch ebenfalls eine Komprimierung des Filtermaterials 12 aufgrund des Eigengewichts bzw. des aufgenommenen Abwassers W verhindert werden kann.

In Figur 3B ist eine Draufsicht eines Ausführungsbeispiels des Gehäuses 100 dargestellt. Die Krallen 115 sind so ausgebildet, dass sie in der Draufsicht innerhalb der Öffnungen 113 des unteren Teils 128 bleiben, die von den Stegen 116 und der Struktur 117 an den Enden der Stege 119 gebildet werden. Dadurch wird eine besonders große und vorteilhafte Öffnung 111 im oberen Teil 127 in der Außenkontur des Gehäuses 100 geschaffen, sodass ein eine verbesserte Aufnahme und Abnahme von Abwasser W ermöglicht wird. Gleichzeitig ist die Öffnung 111 groß genug, um das Filtermaterial 12 in das Gehäuse 100 einzubringen. Insbesondere beträgt der Anteil der Öffnungen 111 und 113 in der Außenkontur des Gehäuses 100 zwischen 40% und 85%, vorzugsweise zwischen 60% und 70%.

Struktur 117, welche mit den Enden 119 der Stege 116 verbunden ist, kann zudem kreisförmig ausgebildet sein, sodass keine Öffnung innerhalb der Struktur 117 ausgebildet wird. Damit wird die Auflagefläche für das Filtermedium 12 erhöht, wodurch ein Komprimieren des Filtermediums 12 verhindert wird.

Schnittdarstellung Z zeigt eine Seitendarstellung der Schnittebene durch den Mittelpunkt M des Gehäuses 100. Die Wandstärke der Krallen d1 ist insbesondere so ausgeführt, dass sie größer ist als die Wandstärke der ringförmigen Struktur d2, vorzugsweise zwischen 1,5mm und 3mm. So kann ein Verbiegen oder eine plastische Verformung der Krallen 115 bei äußerer Belastung, welche beispielsweise durch die Gewichtskraft weiterer Gehäuse 100 inklusive Filtermaterialien 12 und Abwasser W entstehen kann, im Vergleich zu dünneren Wandstärken der Krallen verringertwerden. Insbesondere kann das Ende der Kralle 118 eine bezüglich dem Rest der Kralle 115 verringerte Wandstärke d3, vorzugsweise im Bereich zwischen 1,5mm und 3mm, aufweisen. So können die Krallen 115 und auch das Gehäuse 100 bezüglich ihres Gewichts und Materialverbrauchs verbessert werden.

Die Struktur 117 kann zudem einen Fortsatz 125 aufweisen, der von der Struktur 117 aus in Richtung des Innenraums 126 des Gehäuses 100 gerichtet ist. Durch den Fortsatz 125 kann das Gehäuse 100 so ausgeführt werden, dass etwaiges Filtermaterial 12, das in das Gehäuse 100 eingebracht wurde, nicht verrutschen kann.

Die ringförmige Struktur 14 ist insbesondere so ausgebildet, dass sie über die Außenflächen der Krallen 15a und Stege 16a hinausgeht, um die nötige Festigkeit des Gehäuses zu gewährleisten und als Anschlussfläche für die Verstärkungsrippen 21, 22 und 23 zu dienen.

Dank des erfindungsgemäßen Behälters wird das Filtermaterial auch in unteren Bereichen einer Kammer einer erfindungsgemäßen Abwasserreinigungsanlage nicht komprimiert. Dies liegt daran, dass die Gehäuse formerhaltend auf das Filtermaterial wirken.

## Patentansprüche

1. Abwasserreinigungsanlage, die mindestens eine Kammer (3), vorzugsweise eine Kunststoffkammer, umfasst, **dadurch gekennzeichnet, dass**
mindestens eine der Kammern (3) mit mehreren Gehäusen (10, 100) zumindest teilweise gefüllt ist,
die Gehäuse (10, 100) jeweils ein, vorzugsweise elastisches, Filtermaterial (12) beinhalten und jeweils mindestens eine Öffnung (11, 13, 24, 113) aufweisen, die so ausgeführt ist, dass Abwasser (W) eintreten und austreten kann, und
die Gehäuse (10, 100) so ausgebildet sind, dass sie jeweils das Filtermaterial (12) in ihrem Innenraum (26, 126) halten können und vorzugsweise eine Hinterschneidung bezüglich der mindestens einen Öffnung (11, 13, 24, 113) aufweisen.

2. Abwasserreinigungsanlage nach Anspruch 1, wobei die Gehäuse (10, 100) so ausgeführt sind, dass sich die Abmessung der Außenkontur der Gehäuse (10, 100), die weiter unten in der mindestens einen Kammer (3) angeordnet sind, durch den Druck durch das Gewicht der weiter oben angeordneten Gehäuse (10, 100) in vertikaler Richtung (Z) um weniger als 30%, insbesondere 15%, im Vergleich zum unbelasteten Zustand verändert.

3. Abwasserreinigungsanlage, wobei die Gehäuse (10, 100) so geformt sind, dass zwischen den Gehäusen (10, 100) Freiräume (F) ausgebildet sind.

4. Gehäuse (10, 100), vorzugsweise ein Kunststoffgehäuse, zum Aufnehmen eines Filtermaterials (12) für eine Abwasserreinigungsanlage (1) gemäß einem der Ansprüche 1 bis 3,
wobei das Gehäuse (10, 100) mindestens eine Öffnung (11, 13, 24, 113) aufweist,
wobei das Gehäuse (10, 100) so ausgebildet ist, dass es das Filtermaterial (12) in seinem Innenraum (26, 126) halten kann und vorzugsweise eine Hinterschneidung bezüglich der mindestens einen Öffnung (11, 13, 24, 113) aufweist.

5. Gehäuse nach Anspruch 4, wobei das Gehäuse (10, 100) so ausgebildet ist, dass sich die Abmessung der Außenkontur des Gehäuses durch eine Druckbelastung von 100N, insbesondere durch eine Druckbelastung von 500N, in Belastungsrichtung um weniger als 30%, insbesondere um weniger als 15%, im Vergleich zum unbelasteten Zustand verändert.

6. Gehäuse nach Anspruch 4 oder 5, wobei das Gehäuse (10, 100) ein Filtermaterial (12) beinhaltet, insbesondere ein elastisches hydrophiles Filtermaterial, vorzugsweise aus recyceltem Kunststoff, Steinwolle oder Glaswolle.

7. Gehäuse nach einem der Ansprüche 4 bis 6, wobei das Gehäuse einstückig, insbesondere als Spritzgussteil, ausgebildet ist.

8. Gehäuse nach einem der Ansprüche 4 bis 7, wobei mindestens eine der Öffnungen (11, 13, 24, 113) zum Aufnehmen des Filtermaterials (12) ausgebildet ist.

9. Gehäuse nach einem der Ansprüche 4 bis 8, wobei das elastische Filtermaterial (12) den Innenraum (26, 126) des Gehäuses (10, 100) ausfüllt.

10. Gehäuse nach einem der Ansprüche 4 bis 9, wobei zwischen 25% und 60% der Oberfläche des Gehäuses (10, 100) geöffnet sind.

11. Gehäuse nach einem der Ansprüche 4 bis 10, wobei das Gehäuse (10, 100) einen oberen Teil (27, 127) und einen unteren Teil (28, 128) aufweist, die über eine ringförmige Struktur (14, 114) miteinander verbunden sind, wobei die innere Querschnittsfläche des Gehäuses (10, 100) von der ringförmigen Struktur (14, 114) aus zum oberen und unterem Ende des Gehäuses (10, 100) abnimmt und sich vorzugsweise im oberen Teil (27, 127) mehrere zueinander gekrümmte Krallen (15, 115) von der ringförmige Struktur (14, 114) aus nach oben erstrecken.

12. Gehäusenach Anspruch 11, wobei sich im unteren Teil (28, 128) von der ringförmigen Struktur (14, 114) aus mehrere zueinander gekrümmte Stege (16, 116) nach unten erstrecken und an ihren Enden (19, 119), insbesondere über eine zweite ringförmige oder kreisförmige Struktur (17, 117), zusammenlaufen.

13. Gehäuse nach Anspruch 12, wobei die Stege (16, 116) und Krallen (15, 115) auf der ringförmigen Struktur (14, 114) zueinander versetzt angeordnet sind.

14. Gehäuse nach einem der Ansprüche 11 bis 13, wobei die Krallen (15, 115) und/oder Stege (16, 116) mindestens eine Verstärkungsrippe (21, 22) ausgehend von der ringförmigen Struktur (14, 114) in Richtung ihrer Enden (18, 118, 19, 119) aufweisen.

15. Gehäuse nach einem der der Ansprüche 4 bis 14, wobei das Gehäuse (10, 100) so geformt ist, dass in einer Gruppe von aufeinanderliegenden Gehäusen (10, 100) Zwischenräume (Z) zwischen den erfindungsgemäßen Gehäusen (10, 100) entstehen.

16. Gehäuse nach einem der der Ansprüche 4 bis 15, wobei das Gehäuse (10, 100) eine abgerundete Außenkontur aufweist.

17. Gehäuse nach Anspruch 115 oder 16, wobei das Gehäuse (10, 100) die Außenform einer Kugel, einer abgeflachten Kugel, eines Polyeders, eines Ellipsoids oder eines Zylinders aufweist.

18. Gehäuse nach einem der Ansprüche 4 bis 17, wobei eine Abmessung des Gehäuses (10, 100) in einer der drei Dimensionen, 100mm, insbesondere 250mm, nicht überschreitet.

19. Gehäuse nach Anspruch 18, wobei das Volumen des Gehäuses (10, 100) in einem Bereich von 150cm³ bis 20.000cm³ liegt.
